# FASCICULE DE BREVET EUROPEEN

(11) **EP 1 245 579 B1**
(45) Date de publication et mention de la délivrance du brevet: **28.02.2007**
(21) Numéro de dépôt: 02290750.5
(22) Date de dépôt: 26.03.2002
(51) Int. Cl.: C08B 30/18, A23L 1/09, A23G 3/00

(54) **Confiserie sans sucre**
Zuckerfreie Süssware
Sugar-free confectionery

(30) Priorité: 30.03.2001 FR 0104418
(43) Date de publication de la demande: 02.10.2002
(73) Titulaire: Roquette Frères, 62136 Lestrem (FR)
(72) Inventeur: Serpelloni, Michel, 62660 Beuvry-les-Bethune (FR)
(74) Mandataire: Boulinguiez, Didier

(56) Documents cités:
- EP-A- 1 006 128
- WO-A-95/02969
- ES-A- 2 078 186
- US-A- 4 238 475
- PATENT ABSTRACTS OF JAPAN vol. 1998, no. 10, 31 août 1998 (1998-08-31) & JP 10 117704 A (MITSUBISHI CHEM CORP), 12 mai 1998 (1998-05-12)
- PATENT ABSTRACTS OF JAPAN vol. 017, no. 216 (C-1053), 28 avril 1993 (1993-04-28) & JP 04 356169 A (AJINOMOTO CO INC), 9 décembre 1992 (1992-12-09) & DATABASE WPI Derwent Publications Ltd., London, GB; AN 1993-039127

## Description

La présente invention concerne une nouvelle confiserie obtenue en utilisant une quantité appropriée de maltodextrines branchées en combinaison avec au moins un polyol.

De nos jours, pour ce qui concerne la confiserie et les friandises, il semble que de nouvelles tendances fortes de consommation se dessinent. Les notions d'équilibre nutritionnel et d'hygiène de vie sont consciemment ou non prises en compte dans l'alimentation d'aujourd'hui. Bien que le plaisir du sucré reste toujours très vivace, bon nombre de consommateurs souhaitent éviter les problèmes liés à la consommation des sucres. C'est dans ce but que les confiseurs ont été amenés à développer des formulations sans sucre dans lesquelles les polyols appelés parfois sucre-alcools trouvent un juste emploi en raison de leur innocuité vis-à-vis des dents et de leur caloricité réduite par rapport au saccharose.

L'une des grandes difficultés auxquelles les formulateurs de confiseries sans sucre ne peuvent se soustraire est celle de réussir la fabrication de produits en tous points semblables aux produits traditionnels au point de s'y méprendre, ceci sans avoir à modifier ou à compliquer de façon importante les installations et les procédures en place dans les industries. Cela vaut également pour les confiseries objets de la présente invention.

On connaît divers documents témoignant de recherches actives dans ce sens. On peut citer en particulier :

Le document «PATENT ABSTRACTS OF JAPAN, vol. 017, no. 216 (C-1053), 28.04.1992» divulgue des aliments qui comprennent de la matière grasse et de la gélatine.

Le document US-A-4,238,475 divulgue que la gélatine peut être substituée par une maltodextrine comme agent épaississant dans un ehewing-gum.
- les documents US-A-4.597.981 et US-A-4.323.359 relatifs tous deux à des confiseries tendres sans sucre contenant de la gélatine.
- Le document FR-A-2.338.651 dans laquelle est revendiquée un nouveau procédé de fabrication de bonbons à pâte molle présentant une structure cristalline. Ce procédé convient tout aussi bien à l'obtention de produits classiques que des produits sans sucre. Le mannitol est cité parmi les nombreux substituts possibles des sucres, mais le xylitol, préféré en raison de la sensation de fraîcheur qu'il procure en bouche, est utilisé en tant que seul et unique substitut de mélanges de sucre et de sirop de glucose. La demanderesse a constaté que cela ne s'avère pas possible avec le mannitol.
- Le document EP-A-377.278 ayant trait à une composition édulcorante diététique, dans laquelle sont décrites des pâtes à mâcher grainées, contenant également du xylitol. Ce dernier représente toujours au moins 38 % de la charge édulcorante ce qui compte tenu de son prix sur le marché, tend à dissuader les industriels de son emploi dans une telle application. Par ailleurs, les produits obtenus les plus intéressants du point de vue de leurs textures et de leurs stabilités nécessitent des températures de cuisson très élevées voisines de 165°C mais également la maturation de la masse cuite durant une nuit avant d'être travaillée à nouveau. On comprend qu'une mise en place industrielle d'un tel procédé s'avère très délicate.
- Le document EP-A-0.630.573 décrivant des confiseries aérées et grainées sans sucre, exempte de composés cellulosiques dérivés de la cellulose, comportant un polyol choisi parmi le mannitol et l'érythritol, ledit polyol constituant de 13,5 à 28 % de la charge édulcorante de ladite confiserie.

Il n'existe donc pas ainsi à l'heure actuelle de solutions techniquement ou économiquement viables permettant la fabrication de confiseries sans sucre, présentant les caractéristiques qualitatives énoncées plus haut.

Fort de ce constat, la Demanderesse s'est attachée à remédier à cette carence tout en se donnant comme objectif essentiel de réduire au maximum les quantités de polyols à employer dans la préparation de telles confiseries. Ceci se justifie pour des raisons d'ordre technique liées à l'aisance des fabrications mais aussi d'ordre économique et métabolique c'est à dire en particulier de tolérance digestive. De plus, il est particulièrement avantageux de limiter autant que possible l'incorporation de polyols qui, certes sont moins caloriques que le sucre, mais le sont plus que d'autres agents de charges susceptibles d'entrer également dans la formulation de telles confiseries, de sorte qu'ainsi, si cela est désiré, un allégement calorique nettement plus important peut être obtenu.

Enfin, il est également possible d'envisager, grâce à l'emploi d'une quantité faible de polyols, l'introduction de substances aux propriétés nutritionnelles ou pharmacodynamiques intéressantes comme, dans le cas de la présente invention des maltodextrines branchées et ceci en quantité non négligeable.

C'est après maints essais que la Demanderesse a eu le mérite de constater, de façon surprenante et inattendue que l'association de maltodextrines branchées et de certains polyols permettait de préparer des confiseries sans sucre, très bien tolérées, éventuellement de faible valeur calorique, d'excellente stabilité et de texture adaptable, à un taux d'emploi, ramené à la charge édulcorante présente dans les confiseries, particulièrement bas et notamment plus bas que celui décrit dans le document EP-A-0.630.573.

L'invention a donc pour objet une confiserie sans sucre, caractérisée par le fait qu'elle comprend une charge édulcorante comprenant des maltodextrines branchées présentant entre 15 et 35 % de liaisons glucosidiques 1→6, une teneur en sucres réducteurs inférieure à 20 %, un indice de polymolécularité inférieur à 5 et une masse moléculaire moyenne en nombre Mn au plus égale à 4500 g/mole et au moins un polyol choisi dans le groupe constitué par l'érythritol, le mannitol, l'isomalt, le lactitol et le maltitol, lesdites maltodextrines branchées constituant 75 % de la charge édulcorante.

Par «maltodextrines branchées» on entend au sens de la présente invention les maltodextrines décrites dans le document EP-A-1.006.128 dont la Demanderesse est titulaire. Ces maltodextrines branchées présentent un caractère d'indigestibilité qui a pour conséquence de diminuer leur pouvoir calorique, en empêchant leur assimilation au niveau de l'intestin grêle. Leur faible teneur en molécules de faible degré de polymérisation (« DP ») contribue également à leur faible caloricité. Leur teneur élevée en liaisons glucosidiques 1→6 a pour conséquence d'abaisser leur pouvoir cariogène en réduisant leur assimilation par les micro-organismes de la cavité buccale. Ce taux élevé en liaisons 1→6 leur confère également des propriétés prébiotiques tout à fait particulières : il est en effet apparu que les bactéries du caecum et du colon de l'homme et des animaux, telles que les bactéries butyrogènes, lactiques ou propioniques métabolisent des composés hautement branchés. D'autre part, ces maltodextrines branchées favorisent le développement des bactéries bifidogènes au détriment des bactéries indésirables. Il en résulte des propriétés tout à fait bénéfiques pour la santé du consommateur.

Selon une variante préférée de la présente invention, lesdites maltodextrines branchées présentent une teneur en sucres réducteurs comprise entre 2 et 5 % et un Mn compris entre 2000 et 3000 g/mole et peuvent être, en tout ou partie hydrogénées.

Le polyol de la charge édulcorante de la confiserie conforme à la présente invention, c'est-à-dire l'érythritol et/ou le mannitol et/ou l'isomalt et/ou le lactitol et/ou le maltitol, constitue au plus 13,5 % et de préférence au plus 10 % de la charge édulcorante qu'elle comporte, considérée en l'état sec.

La teneur exacte en érythritol, en mannitol, en isomalt, en lactitol ou en maltitol variera avec la nature de la confiserie fabriquée mais aussi en fonction de la texture finale désirée. Cette dernière pourra être ajustée par le choix des autres ingrédients et par la teneur en eau de la confiserie.

De façon générale, compte tenu que, par exemple, la solubilité du maltitol est supérieure à celle de l'érythritol, laquelle étant elle-même supérieure à celle du mannitol, les quantités de maltitol à introduire pour obtenir une confiserie conforme à l'invention de texture courte seront supérieures à celles d'érythritol, lesquelles seront supérieures à celles du mannitol.

Il est également possible de combiner le mannitol et l'érythritol afin de contrôler la cristallisation de l'un d'eux par l'autre. Dans ce cas, les teneurs en ces polyols seront également inférieures à 13,5 % par rapport à la charge édulcorante totale de la confiserie, considérée en sec.

La teneur optimale en mannitol ou en érythritol pourra aisément être déterminée par l'homme du métier par quelques essais de routine selon que son installation industrielle permet la fabrication de confiseries coulées, moulées, découpées ou encore extrudées.

Dans la pratique, cette charge édulcorante considérée en sec représentera de 60 à 96 %, de préférence de 70 à 90 % et plus préférentiellement de 75 à 88 % de la confiserie telle que commercialisée.

La confiserie conforme à l'invention peut éventuellement comprendre des agents viscosifiants (gomme arabique, gélatine, amidons modifiés, maltodextrines, carraghénanes, agar, pectine,...), des agents émulsifiants, des agents humectants (sorbitol, glycérine), des produits laitiers (lait en poudre, protéines de lait, lait concentré, lait, ...), du blanc d'oeuf, des édulcorants intenses (aspartame, acésulfame, saccharine, cyclamates, ...) des arômes et de l'air.

En ce qui concerne les gélatines, l'aptitude à donner des gels consistants c'est à dire pour l'homme du métier le degré bloom, sera pris en compte dans les dosages. Ainsi, on préférera retenir des gélatines de très hauts blooms lorsque l'on souhaitera limiter l'apport en protéines ou bien obtenir une texture élastique. Rien n'interdira également au contraire d'utiliser des protéines en tant que produits de charge, comme par exemple dans le cas de confiseries diététiques ou pharmaceutiques. On retiendra de préférence alors les gélatines de bas blooms, les protéines laitières et le blanc d'oeuf.

Les agents qui viennent d'être décrits représenteront de préférence au plus 15% en poids de la confiserie telle que commercialisée.

Les confiseries conformes à l'invention, comme notamment les pâtes à mâcher, les caramels, les toffes, les fudges et les nougats, comporteront également comme il est d'usage pour les formulations classiques, de la matière grasse dans des proportions appropriées connues de l'homme du métier. En ce qui concerne sa nature, il s'agira de préférence d'une matière grasse laitière ou d'une huile végétale hydrogénée, de palme, de coprah ou encore de soja. Ces matières grasses pour des raisons organoleptiques possèderont avantageusement un point de fusion sensiblement voisin de la température buccale, et seront de préférence employées à un taux compris entre 1 et 10 %.

L'emploi d'un émulsifiant sera facultatif, notamment lorsque des teneurs élevées en protéines seront présentes. Il n'empêche que lorsque de la matière grasse viendra à être utilisée en quantité non négligeable dans la formulation des confiseries selon l'invention, il sera toujours préférable de prévoir son ajoût à un taux de 0,1 à 2 % par rapport à confiserie. Cet émulsifiant pourra être choisi en particulier parmi les lécithines, les esters gras de glycérol, de saccharose ou de sorbitol.

Les confiseries conformes à l'invention présentent de plus et de façon générale, une teneur en eau variant entre 3 et 20 % et de préférence entre 4 et 17 %. On retiendra des valeurs plutôt hautes pour des pâtes à mâcher, des caramels ou des nougats. Il est à noter que par rapport aux recettes classiques, les teneurs en eau sont beaucoup plus élevées.

La forte viscosité des maltodextrines branchées (de l'ordre de 193,3 mPa.s en solution à 50% de matière sèche et à 20°C)) permet en effet de produire des confiseries sans sucre, en particulier des pâtes à mâcher et des caramels, à très fortes humidités résiduelles et à forts Aw (activité en eau) . Avantageusement, l'Aw est supérieure à 0,4, de préférence supérieure à 0,5 et plus préférentiellement supérieure à 0,6.

Les confiseries aérées et grainées conformes à l'invention présentent avantageusement la caractéristique de pouvoir être préparées selon les procédés conventionnels déjà en place dans les industries.

D'excellents résultats ont ainsi été obtenus lorsque la confiserie sans sucre conforme à l'invention est une pâte à mâcher comprenant outre de la gélatine une charge édulcorante comprenant un polyol choisi dans le groupe constitué par l'érythritol, le mannitol et le maltitol et des maltodextrines branchées dans les proportions mentionnées ci-dessus.

Ce qui est par ailleurs remarquable, c'est que la nature et la quantité du polyol peuvent être choisies en fonction de la texture souhaitée pour la pâte à mâcher.

Ce qui est encore plus remarquable, c'est qu'il est possible de substituer tout ou partie de la gélatine par des maltodextrines branchées présentant entre 15 et 35 % de liaisons glucosidiques 1→6, une teneur en sucres réducteurs inférieure à 20 %, de préférence comprise entre 2 et 5 %, un indice de polymolécularité inférieur à 5 et une masse moléculaire moyenne en nombre Mn au plus égale à 4500 g/mole et de préférence compris entre 2000 et 3000 g/mole.

D'excellents résultats ont été également obtenus lorsque la confiserie sans sucre conforme à l'invention est un caramel comme cela est exemplifié ci-après.

D'autres caractéristiques et avantages de la présente invention apparaîtront clairement à la lecture des exemples qui suivent, données à titre illustratif et nullement limitatif.

### Exemple 1 : pâte à mâcher avec gélatine

### A - FORMULE

| | | Composition En poids | Composition Produit fini (%) |
|---|---|---|---|
| A) | Maltodextrines branchées | 595.0 | 69.7 % |
| | Erythritol | 76.0 | 9.4 % |
| | Eau | 252.0 | - |
| B) | Matières grasses végétales (Toffita/Loders Croklaan) | 40.0 | 4.9 % |
| | Monostéarate de glycérol | 4.0 | 0.5 % |
| C) | Gélatine (type A - 180 blooms) | 8.0 | 1.0 % |
| | Eau | 12.0 | - |
| D) | Acésulfame K | 0.7 | 0.1 % |
| | Arôme cerise | 7.0 | 0.9 % |
| | Solution acide citrique (50% M.S.) | 5.3 | 0.3 % |
| | Colorant rouge | q.s. | - |
| | Eau résiduelle | - | 13.2 % |
| | | ----- | ----- |
| | | 1000.0 | 100.0 % |

### B - MODE PREPARATOIRE

➢ Cuire le mélange (A) à 110°C (Brix = 85.2) sous pression atmosphérique.
➢ Laisser refroidir en mélangeant et ajouter le mélange B (préalablement fondu à 60°C), la solution de gélatine (C, maintenue à 60°C), puis D quand la température du mélange atteint 60°C.
➢ Refroidir la pâte.
➢ Etirer la pâte (1 min. soit 50 révolutions du bras de l'étireuse).
➢ Former
➢ Découper et emballer.

### C.- REMARQUE

Aw à 20°C = 0.60
Brix final = 87.6

### Exemple 2 : pâte à mâcher sans gélatine

### A - FORMULE

| | | Composition En poids | Composition Produit fini (%) |
|---|---|---|---|
| A) | Maltodextrines branchées | 595.0 | 68.9 % |
| | Erythritol | 76.0 | 9.3 % |
| | Eau | 264.0 | - |
| B) | Matières grasses végétales (Toffita/Loders Croklaan) | 48.0 | 5.9 % |
| | Monostéarate de glycérol | 4.0 | 0.5 % |
| C) | Acésulfame K | 0.7 | 0.1 % |
| | Arôme cerise | 7.0 | 0.9 % |
| | Solution acide citrique (50% M.S.) | 5.3 | 0.3 % |
| | Colorant rouge | q.s. | - |
| | Eau résiduelle | - | 14.2 % |
| | | ----- | ----- |
| | | 1000.0 | 100.0 % |

### B - MODE PREPARATOIRE

➢ Cuire le mélange (A) à 108°C (Brix = 83.5) sous pression atmosphérique.
➢ Laisser refroidir en mélangeant et ajouter le mélange B (préalablement fondu à 60°C), puis C quand la température du mélange atteint 60°C.
➢ Refroidir la pâte.
➢ Etirer la pâte (1 mn soit 50 révolutions du bras de l'étireuse).
➢ Former
➢ Découper et emballer.

### C.- REMARQUE

Aw à 20°C = 0.63
Brix final = 85.7

### Exemple 3 : pâte à mâcher au mannitol

### A - FORMULE

| | | Composition En poids | Composition Produit fini (%) |
|---|---|---|---|
| A) | Maltodextrines branchées | 595.0 | 67.3 % |
| | Mannitol 60 | 72.0 | 8.6 % |
| | Eau | 252.0 | - |
| B) | Matières grasses végétales (Toffita/Loders Croklaan) | 40.0 | 4.8 % |
| | Monostéarate de glycérol | 4.0 | 0.5 % |
| C) | Gélatine (type A - 180 blooms) | 8.0 | 1.0 % |
| | Eau | 12.0 | - |
| D) | Mannitol 35 | 4.0 | 0.5 % |
| | Acesulfame K | 0.7 | 0.1 % |
| | Arôme cerise | 7.0 | 0.8 % |
| | Solution acide citrique (50% M.S.) | 5.3 | 0.3 % |
| | Colorant rouge | q.s. | q.s. |
| | Eau résiduelle | - | 16.1 % |
| | | ----- | ----- |
| | | 1000.0 | 100.0 % |

### B - MODE PREPARATOIRE

➢ Cuire le mélange (A) à 160°C (Brix = 84.2) sous pression atmosphérique.
➢ Laisser refroidir en mélangeant et ajouter le mélange B (préalablement fondu à 60°C), puis ajouter la solution de gélatine (C, maintenue à 60°C), puis le mélange D quand la température du mélange atteint 60°C.
➢ Refroidir la pâte.
➢ Etirer la pâte (1 mn soit 50 révolutions du bras de l'étireuse).
➢ Former
➢ Découper et emballer.

### C.- REMARQUE

Aw à 20°C = 0.74
Brix final = 85.2

### Exemple 4 : pâte à mâcher au maltitol

### A - FORMULE

| | | Composition En poids | Composition Produit fini (%) |
|---|---|---|---|
| A) | Maltodextrines branchées | 595.0 | 67.0 % |
| | MALTISORB^{®} P200 maltitol | 76.0 | 9.0 % |
| | Eau | 252.0 | - |
| B) | Matières grasses végétales (Toffita/Loders Croklaan) | 40.0 | 4.8 % |
| | Monostéarate de glycérol | 4.0 | 0.5 % |
| C) | Gélatine (type A - 180 blooms) | 8.0 | 0.9 % |
| | Eau | 12.0 | - |
| D) | Acesulfame K | 0.7 | 0.1 % |
| | Arôme cerise | 7.0 | 0.8 % |
| | Solution acide citrique (50% M.S.) | 5.3 | 0.3 % |
| | Colorant rouge | q.s. | q.s. |
| | Eau résiduelle | - | 16.6 % |
| | | ----- | ----- |
| | | 1000.0 | 100.0 % |

### B - MODE PREPARATOIRE

➢ Cuire le mélange (A) à 104°C (Brix = 84.6) sous pression atmosphérique.
➢ Laisser refroidir en mélangeant et ajouter le mélange B (préalablement fondu à 60°C), puis ajouter la solution de gélatine (C, maintenue à 60°C), puis le mélange D quand la température du mélange atteint 60°C.
➢ Refroidir la pâte.
➢ Etirer la pâte (1 mn soit 50 révolutions du bras de l'étireuse).
➢ Former
➢ Découper et emballer.

### C.- REMARQUE

Aw à 20°C = 0.64
Brix final = 84.3

### Exemple 5 : caramel

### A - FORMULE

| | | Composition En poids | Composition Produit fini (%) |
|---|---|---|---|
| A) | Maltodextrines branchées | 595.0 | 68.3 % |
| | Erythritol | 76.0 | 9.2 % |
| | Eau | 264.0 | - |
| B) | Matières grasses végétales (Toffita/Loders Croklaan) | 48.0 | 5.8 % |
| | Monostéarate de glycérol | 4.0 | 0.5 % |
| C) | Acesulfame K | 0.7 | 0.1 % |
| | Arôme caramel (Fontarôme - 50398) | 7.0 | 0.8 % |
| | Colorant caramel E 241 | 5.3 | 0.6 % |
| | Eau résiduelle | - | 15.0 % |
| | | ----------- | ----------- |
| | | 1000.0 | 100.0 % |

### B - MODE PREPARATOIRE

➢ Cuire le mélange (A) + le mélange (B) (préalablement fondu à 60°C) à 108°C (Brix = 84.5) sous pression atmosphérique.
➢ Durant la cuisson, ajouter le mélange C.
➢ Refroidir.
➢ Former
➢ Découper et emballer.

### C.- REMARQUE

Aw à 20°C = 0.57

## Revendications

1. Confiserie sans sucre, **caractérisée par le fait qu'**elle comprend une charge édulcorante comprenant des maltodextrines branchées présentant entre 15 et 35% de liaisons glucosidiques 1-->6, une teneur en sucres réducteurs inférieure à 20%, un indice de polymolécularité inférieur à 5 et une masse moléculaire moyenne en nombre Mn au plus égale à 4500 g/mole et au moins un polyol choisi dans le groupe constitué par l'erythritol, le mannitol, l'isomalt, le lactitol et le maltitol, lesdites maltodextrines branchées constituant 75% de la charge édulcorante et le dit polyol constituant au plus 13,5 %, et de préférence au plus 10% de la charge édulcorante qu'elle comporte.

2. Confiserie selon la revendication 1, **caractérisée par le fait que** lesdites maltodextrines branchées présentent une teneur en sucres réducteurs comprise entre 2 et 5% et un Mn compris entre 2000 et 3000 g/mole.

3. Confiserie selon la revendication 1 ou 2, **caractérisée par le fait que** tout ou partie des maltodextrines sont hydrogénées.

4. Confiserie selon l'une quelconque des revendications 1 à 3, **caractérisée par le fait que** sa teneur en eau est comprise entre 3 et 20% et de préférence entre 4 et 17%.

5. Confiserie selon l'une quelconque des revendications 1 à 4, **caractérisée par le fait que** son activité en eau (Aw) est supérieure à 0,4, de préférence supérieure à 0,5 et plus préférentiellement supérieure à 0,6.

6. Confiserie selon l'une quelconque des revendications 1 à 5, **caractérisée par le fait que** outre la charge édulcorante, ladite confiserie comprend de la matière grasse.

7. Confiserie selon l'une quelconque des revendications 1 à 6, **caractérisée par le fait qu'**elle est une pâte à mâcher et qu'elle comprend de la gélatine.

8. Confiserie selon la revendication 7, **caractérisée par le fait que** tout ou partie de la gélatine est substituée par des maltodextrines branchées présentant entre 15 et 35% de liaisonsglucosidiques-16, une teneur en sucres réducteurs inférieure à 20%, de préférence comprise entre 2 et 5%, un indice de polymolécularité inférieur à 5 et une masse moléculaire moyenne en nombre Mn au plus égale à 4500 g/mole et de préférence compris entre 2000 et 3000 g/mole.

9. Confiserie selon l'une quelconque des revendications 1 à 6, **caractérisée par le fait qu'**elle est un caramel.

## Claims

1. Sugar-free confectionery, **characterised in that** it comprises a sweetening bulking agent comprising branched maltodextrins having between 15 and 35% of 1-->6 glucoside linkages, a reducing sugar content of less than 20%, a polymolecularity index of less than 5 and a number-average molecular weight Mn of not more than 4500 g/mole, and at least one polyol selected from the group consisting of erythritol, mannitol, isomalt, lactitol and maltitol, said branched maltodextrins constituting 75% of the sweetening bulking agent and said polyol constituting not more than 13.5% and preferably not more than 10% of the sweetening bulking agent contained.

2. Confectionery according to claim 1, **characterised in that** said branched maltodextrins have a reducing sugar content of 2 to 5% and an Mn of 2000 to 3000 g/mole.

3. Confectionery according to claim 1 or 2, **characterised in that** all or part of the maltodextrins are hydrogenated.

4. Confectionery according to any one of claims 1 to 3, **characterised in that** its water content is from 3 to 20% and preferably from 4 to 17%.

5. Confectionery according to any one of claims 1 to 4, **characterised in that** its water activity (Aw) is greater than 0.4, preferably greater than 0.5 and more preferably greater than 0.6.

6. Confectionery according to any one of claims 1 to 5, **characterised in that**, in addition to the sweetening bulking agent, said confectionery comprises fat.

7. Confectionery according to any one of claims 1 to 6, **characterised in that** it is a chewable mass and that it comprises gelatin.

8. Confectionery according to claim 7, **characterised in that** all or part of the gelatin is substituted by branched maltodextrins having between 15 and 35% of 16-glucoside linkages, a reducing sugar content of less than 20%, preferably from 2 to 5%, a polymolecularity index of less than 5 and a number-average molecular weight Mn of no more than 4500 g/mole, preferably from 2000 to 3000 g/mole.

9. Confectionery according to any one of claims 1 to 6, **characterised in that** it is a caramel.

## Patentansprüche

1. Zuckerfreie Süßware, **dadurch gekennzeichnet, dass** sie eine Süßungscharge umfasst, die verzweigte Maltodextrine, die zwischen 15 und 35% 1,6-glucosidische Bindungen, einen Gehalt an reduzierenden Zuckern unter 20 %, einen Polymolekularitätsindex unter 5 und ein Zahlenmittel der Molmasse Mn von höchstens gleich 4500 g/Mol aufweisen, und mindestens ein Polyol umfasst, das aus der Gruppe ausgewählt ist, die aus Erythrit, Mannit, Isomalt, Lactitol und Maltit besteht, wobei die verzweigten Maltodextrine 75 % der Sü-ßungscharge bilden und das Polyol höchstens 13,5 % und vorzugsweise höchstens 10 % der Süßungscharge, die sie umfasst, bildet.

2. Süßware nach Anspruch 1, **dadurch gekennzeichnet, dass** die verzweigten Maltodextrine einen Gehalt an reduzierenden Zuckern zwischen 2 und 5 % und einen Wert Mn zwischen 2000 und 3000 g/Mol aufweisen.

3. Süßware nach Anspruch 1 oder 2, **dadurch gekennzeichnet, dass** die Maltodextrine ganz oder teilweise hydriert sind.

4. Süßware nach einem der Ansprüche 1 bis 3, **dadurch gekennzeichnet, dass** ihr Wassergehalt zwischen 3 und 20 % und vorzugsweise zwischen 4 und 17 % beträgt.

5. Süßware nach einem der Ansprüche 1 bis 4, **dadurch gekennzeichnet, dass** ihre Waseraktivität (Aw) höher als 0,4, vorzugsweise höher als 0,5 und noch bevorzugter höher als 0,6 ist.

6. Süßware nach einem der Ansprüche 1 bis 5, **dadurch gekennzeichnet, dass** die Süßware, abgesehen von der Süßungscharge, Fett umfasst.

7. Süßware nach einem der Ansprüche 1 bis 6, **dadurch gekennzeichnet, dass** sie eine Kaumasse ist und dass sie Gelatine umfasst.

8. Süßware nach Anspruch 7, **dadurch gekennzeichnet, dass** die Gelatine ganz oder teilweise mit verzweigten Maltodextrinen substituiert ist, die zwischen 15 und 35 % 1,6-glucosidische Bindungen, einen Gehalt an reduzierenden Zuckern unter 20 %, vorzugsweise zwischen 2 und 5 %, einen Polymolekularitätsindex unter 5 und ein Zahlenmittel der Molmasse Mn von höchstens 4500 g/Mol und vorzugsweise zwischen 2000 und 3000 g/Mol aufweisen.

9. Süßware nach einem der Ansprüche 1 bis 6, **dadurch gekennzeichnet, dass** sie ein Karamell ist.
